(19)

Europäisches
Patentamt

European
Patent Office

Office européen
des brevets

(11) EP 4 311 708 A1

(12) EUROPEAN PATENT APPLICATION

(43) Date of publication:
31.01.2024 Bulletin 2024/05

(51) International Patent Classification (IPC):
B60K 37/06 (2006.01)      B60W 50/00 (2006.01)

(21) Application number: 22187777.2

(22) Date of filing: 29.07.2022

(52) Cooperative Patent Classification (CPC):
B60K 37/06; B60K 2370/177; B60K 2370/179;
B60W 50/0097

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Koninklijke Philips N.V.
5656 AG Eindhoven (NL)

(72) Inventors:
• VAREKAMP, Christiaan
  Eindhoven (NL)
• KROON, Bart
  Eindhoven (NL)
• OOMEN, Arnoldus Werner Johannes
  5656AG Eindhoven (NL)

(74) Representative: Philips Intellectual Property &
Standards
High Tech Campus 52
5656 AG Eindhoven (NL)

(54) APPARATUS AND METHOD FOR AUDIOVISUAL RENDERING

(57) An apparatus comprises a receiver (101) receiving audiovisual data representing a scene. Sources (105, 107) provide a vehicle motion signal indicative of a motion of a vehicle and a relative user motion signal indicative of a motion of a user relative to the vehicle. A predictor (109) generates a predicted relative user motion signal by applying a prediction model to the vehicle motion signal A residual signal generator (111) generates a residual user motion signal indicative of the residual difference between the predicted and received relative user motion. A view pose determiner (113) determines a view pose with different dependencies on the predicted relative user motion signal and the residual user motion signal. A renderer (103) renders an audiovisual signal for the view pose from the audiovisual data. The approach may provide enhanced user experiences that may compensate or include effects of user motion caused by vehicle motion.

**FIG. 1**

**Description**

FIELD OF THE INVENTION

The invention relates to an apparatus and method for audiovisual rendering, such as in particular, but not exclusively, to rendering of an audiovisual signal for an eXtended Reality application for a user subjected to a vehicle motion.

BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and look around in the scene being presented.

Such a feature can specifically allow a virtual reality experience to be provided to a user. This may allow the user to e.g. (relatively) freely move about in a virtual environment and dynamically change his position and where he is looking. Typically, such Virtual Reality (VR) applications are based on a three-dimensional model of the scene with the model being dynamically evaluated to provide the specific requested view. This approach is well known from e.g. gaming applications, such as in the category of first person shooters, for computers and consoles. Other examples include Augmented Reality (AR) or Mixed Reality (MR) applications. Such applications are often in common referred to as eXtended Reality (XR) applications.

An important feature in many e.g. XR applications is the determination of user movements in the real world and adapting the audiovisual representation of virtual features to reflect the user movements.

Detection of user movements may include what is referred to as Outside-in and Inside-out Tracking. Outside-in VR tracking uses cameras or other sensors placed in a stationary location and oriented towards the tracked object (e.g., a headset) that moves freely inside a predetermined area that is covered by the sensors.

Inside-out tracking differentiates itself from outside-in tracking in that the sensors are attached to the object (e.g., integrated in the headset). Image data as captured by multiple camera sensors are used to reconstruct 3D features in the visual surrounding world. Assuming that this world is static, the headset is positioned relative to this world system. Next to cameras, other sensors such as accelerometers can be used to improve accuracy and robustness of the headset pose estimate.

When consuming A/V content in a stationary environment with a VR headset or headphones, the head rotations and optionally translations (e.g. 3DoF or 6DoF (Degrees of Freedom)) (e.g., using one or more cameras) are continuously measured. The measured motions are fed back to the rendering process such that the user's motions relative to the real world are taken into account. For example, when the user turns his head left, relevant objects will turn right. When the user moves slightly sideways, relevant objects are rendered such that the user is able to look from the side and maybe even look around an object to view a previously occluded object. An important assumption for correct operation of such a system is that world objects that are used as reference to determine the user's movements do not move themselves (Called independent motion in the context of visual Structure from Motion algorithms). If for instance, the world reference system would move but not the user, then the user would observe a moving virtual scene while the user is not moving. This would be an unwanted effect. The inside-out tracking therefore needs to be robust for independently moving objects in the real-world scene that surrounds the user.

It has been proposed to provide XR applications and services that are not only suitable for consuming in a mobile environment, but which may also be adapted to reflect or compensate for the movement. However, this provides a number of challenges and difficulties and in particular as the preferred operation and experience may depend on the specific desires and preferences of the individual application.

In some cases, when the user is traveling in a mobile environment, for example a train or car, it may be desirable to not classify the vehicle as an independently moving object. For example, visual features inside the vehicle may be considered to define the reference system and motions of the world outside the vehicle (relative to the vehicle) may be ignored.

If the vehicle travels with a purely constant speed this may be relatively easy to achieve. However, as soon as the vehicle changes velocity or vibrates, it may introduce a motion difference between a passenger and the vehicles internal reference system (typically determined by the visual appearance and geometry of the vehicle) which may cause complex relationships that may substantially complicate the operation of the application. Typically, such motion difference may be picked up by an inside-out tracking device and used to render the virtual scene. Such effects may result in a limited and/or suboptimal user experience and may for example result in presentations that are not fully consistent with the perceived motion.

Further, operations and algorithms considering such more complex motions tend to be suboptimal in terms of complexity, accuracy, computational resource usage etc.

Hence, an improved approach for audiovisual rendering suitable for a user subjected to vehicle motion would be advantageous. In particular, an approach that allows improved operation, increased flexibility, an improved user experience, reduced complexity, facilitated implementation, improved rendering quality, improved and/or facilitated rendering, improved and/or facilitated adaptation to user and vehicle motions, and/or improved performance and/or operation would be advantageous.

SUMMARY OF THE INVENTION

Accordingly, the Invention seeks to preferably mitigate, alleviate or eliminate one or more of the above-mentioned disadvantages singly or in any combination.

According to an aspect of the invention, there is provided an apparatus for audiovisual rendering, the apparatus comprising:

a receiver arranged to receive audiovisual data representing a scene; a first source providing a vehicle motion signal indicative of a motion of a vehicle; a second source providing a relative user motion signal indicative of a motion of a user relative to the vehicle; a predictor arranged to generate a predicted relative user motion signal by applying a prediction model to the vehicle motion signal; a residual signal generator arranged to generate a residual user motion signal indicative of at least a component of a difference between the relative user motion signal and the predicted relative user motion signal; a view pose determiner arranged to determine a view pose in dependence on the residual user motion signal and the predicted relative user motion signal, a dependency of the view pose on the residual user motion signal being different than a dependency of the view pose on the predicted relative user motion signal; and a renderer arranged to render an audiovisual signal for the view pose from the audiovisual data.

The invention may in many applications and scenarios allow improved generation of an audiovisual signal for a user subjected to movement of a vehicle. It may in many scenarios and applications provide an improved user perception of a scene and may for example provide more desirable user experiences. The approach may specifically allow a differentiated adaptation of the rendered audiovisual experience to different types of motion. It may for example allow a user experience which is less affected by vehicle motion, and which may be perceived more similar to an experience in scenarios where the user is not subjected to vehicle movement.

In some scenarios, the approach may for example provide a more flexible and/or improved compensation for the effect of the vehicle movement. It may for example provide an experience that may compensate or adapt the rendered audiovisual signal depending on the vehicle motion such that e.g. motion induced sickness (this typically arises from conflict between the sensory inputs of different senses, such as the sense of balance and the visual sense) or discomfort may be reduced while still allowing the user's intentional motion to be determined and accounted for in the rendering.

For example, it may allow an adaptation of a VR or XR experience where some user motion may be reflected in the audiovisual cues (images and/or sound) provided to the user while compensation of some vehicle motion and its impact on the user may be compensated for.

In many scenarios, an efficient and/or low complexity and/or resource demanding operation may be achieved.

The view pose determiner may in many embodiments be arranged to determine a view pose signal in dependence on the residual user motion signal and the predicted relative user motion signal, a dependency of the view pose on the residual user motion signal being different than a dependency of the view pose on the predicted relative user motion signal. The renderer may be arranged to render an audiovisual signal for the (view poses of a) view pose signal from the audiovisual data.

User motions may specifically be indicative of motions of a head (or possibly) eye of the user. A motion may be a time derivative of a pose. A signal may be one or more values that have a temporal aspect/ are time dependent/ may vary with time.

According to an optional feature of the invention, the prediction model comprises a temporal filtering of the vehicle motion signal.

This may provide particularly advantageous operation and/or rendering in many embodiments. It may allow a prediction that is particularly suitable for adapting the rendering of an audiovisual signal reflecting user movement for a user subjected to a vehicle movement. The temporal filtering may be a high pass filtering of the vehicle motion signal.

According to an optional feature of the invention, the predictor is arranged to apply a temporal filtering to the relative user motion signal to generate a filtered relative user motion signal, and to predict the predicted relative user motion signal in dependence on the filtered relative user motion signal.

This may provide particularly advantageous operation and/or rendering in many embodiments. It may allow a more accurate prediction of relative user motion that is e.g. directly resulting from vehicle motion.

According to an optional feature of the invention, the prediction model comprises a biomechanical model.

This may provide particularly advantageous operation and/or rendering in many embodiments. It may allow a more accurate prediction of relative user motion that is e.g. directly resulting from vehicle motion.

According to an optional feature of the invention, the view pose determiner is arranged to apply a different weighting to the predicted relative user motion signal than to the residual user motion signal.

This may provide particularly advantageous effects in many embodiments and scenarios and may specifically provide improved adaptation and differentiation of different motions.

According to an optional feature of the invention, the view pose determiner is arranged to apply a different temporal filtering to the predicted relative user motion signal than to the residual user motion signal.

This may provide particularly advantageous effects in many embodiments and scenarios and may specifically provide improved adaptation and differentiation of different motions.

According to an optional feature of the invention, the view pose determiner is arranged to determine a first view pose contribution from the predicted relative user motion signal and a second view pose contribution from the residual user motion signal, and to generate the view pose by combining the first view pose contribution and the second view pose contribution.

This may provide advantageous operation in many scenarios.

According to an optional feature of the invention, the view pose determiner is arranged to extract a first motion component from the predicted relative user motion signal by attenuating temporal frequencies, and to determine the view pose to include a contribution from the first motion component.

This may provide advantageous operation in many scenarios.

According to an optional feature of the invention, the view pose determiner is arranged to detect a user gesture motion component in the residual user motion signal and to extract a first motion component from the residual user motion signal in dependence on the user gesture motion component, and to determine the view pose to include a contribution from the user gesture motion component.

This may provide advantageous operation in many scenarios.

According to an optional feature of the invention, the predictor is arranged to determine the predicted relative user motion signal in response to a correlation of the relative user motion signal and the vehicle motion signal.

This may provide advantageous operation in many scenarios.

According to an optional feature of the invention, at least one of the predicted relative user motion signal and the residual user motion signal is indictive of a plurality of pose components, and the view pose determiner is arranged to determine the view pose with different dependencies on at least a first pose component and a second pose component of the plurality of pose components.

This may provide advantageous operation in many scenarios.

According to an optional feature of the invention, the receiver is arranged to receive processing data indicative of a processing of at least one of the predicted relative user motion signal and the residual user motion signal; and the view pose determiner is arranged to determine the view pose in accordance with processing instructions of the processing data.

This may provide advantageous operation in many scenarios.

According to an optional feature of the invention, the predictor is arranged to generate the predicted relative user motion signal in dependence on the residual user motion signal.

This may provide particularly advantageous operation and/or rendering in many embodiments. It may allow a more accurate prediction of relative user motion that is e.g. directly resulting from vehicle motion.

According to an aspect of the invention there is provided method of audiovisual rendering, the method comprising: receiving audiovisual data representing a scene; providing a vehicle motion signal indicative of a motion of a vehicle; providing a relative user motion signal indicative of a motion of a user relative to the vehicle; generating a predicted relative user motion signal by applying a prediction model to the vehicle motion signal; generating a residual user motion signal indicative of at least a component of a difference between the relative user motion signal and the predicted relative user motion signal; determining a view pose in dependence on the residual user motion signal and the predicted relative user motion signal, a dependency of the view pose on the residual user motion signal being different than a dependency of the view pose on the predicted relative user motion signal; and rendering an audiovisual signal for the view pose from the audiovisual data.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of a rendering apparatus for generating an audiovisual signal representing a scene for a user subjected to vehicle motion in accordance with some embodiments of the invention;

FIG. 2 illustrates an example of motion of a user during a turn by a vehicle; and

FIG. 3 illustrates an example of a processor that may be used to implement an apparatus of FIG. 1.

## DETAILED DESCRIPTION OF THE EMBODIMENTS

The following description will focus on an example of audiovisual rendering for an extended reality application for a user subjected to vehicle motion, such as e.g. a user in a car, lorry, plane, boat, train etc. The audiovisual rendering may be a rendering of audio and/or video and may specifically be a rendering of an audiovisual signal that includes both audio and video data.

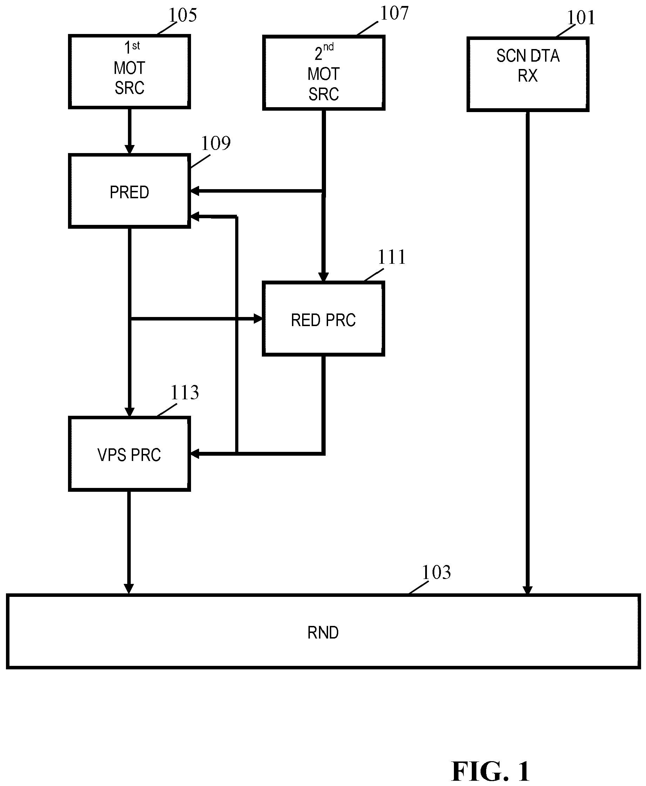

FIG. 1 illustrates an example of a rendering apparatus that is arranged to generate and render an audiovisual signal representing a scene as perceived from a given view pose, and indeed from different varying view poses. Specifically, the rendering apparatus may be arranged to receive motion inputs (directly or indirectly) indicating user pose changes as a function of time, to determine a view pose signal (time sequence of view poses), and render/ generate audio and/or video data representing a scene from the view poses.

In the field, the terms placement and pose are used as a common term for position and/or direction/orientation. The combination of the position and direction/ orientation of e.g., an object, a camera, a head, or a view may be referred to as a pose or placement. Thus, a placement or pose indication may comprise six values/components/ degrees of freedom (6DoF) with each value/component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom). The term pose may be replaced by the term placement. The term pose may be replaced by the term position and/or orientation. The term pose may be replaced by the term position and orientation (if the pose provides information of both position and orientation), by the term position (if the pose provides information of (possibly only) position, or by orientation (if the pose provides information of (possibly only) orientation.

A motion may be a sequence of poses, and specifically may be a time sequence of pose changes/ variations. A motion may represent one or more components of a pose. A motion may be a sequence/ change of orientation and/or position. A motion (of an object) may be a change with respect to time of an orientation and/or position (of the object). A motion (of an object) may be a change with respect to time, of a pose (of the object).

The rendering apparatus is arranged to receive audiovisual data representing a scene and from this data it renders an audiovisual signal reflecting an audio and/or visual perception of the scene from view poses for the scene. In some embodiments, the audiovisual data may be audio data and the generated audiovisual signal may be an audio signal providing an auditive representation of the scene from the view poses. In some embodiments, the audiovisual data may be visual/ video data and the generated audiovisual signal may be a visual/ video signal providing a visual representation of the scene from the view poses. In many embodiments, the rendering apparatus may be arranged to generate an audiovisual signal that includes both audio and visual data representing both a visual and audio perception of the scene from the view poses (and thus the received audiovisual data representing the scene may be both video and audio data).

The rendering apparatus comprises a receiver 101 which is arranged to receive audiovisual data representing a scene. The receiver 101 may provide three dimensional image and/or audio data that provides a representation of a three dimensional scene. The audiovisual data received by the receiver 101 will henceforth for brevity also be referred to as scene data

The receiver 101 may for example comprise a store or memory in which the scene data is stored and from which it can be retrieved. In other embodiments, the image data source 101 may receive or retrieve the audiovisual data from any external (or other internal source). In many embodiments, the receiver 101 may for example be received from a video and/or audio capture system that includes video cameras and microphone (arrays) capturing a real-world scene, e.g. in real time.

The scene data may provide a suitable representation of the scene using a suitable image or typically video format/ representation and/or a suitable three dimensional audio format/ representation. In some embodiments, the receiver 101 may receive scene data from different sources and/or in different formats, and it may from this generate suitable data for rendering, e.g. by converting or processing the received scene data. For example, image and depth may be received from remote cameras and may be processed to generate a video representation in accordance with a given format. In some embodiments, the receiver 101 may be arranged to generate the three dimensional image data by evaluating a model of the scene.

The scene data is provided in accordance with a suitable three dimensional data format/ representation. The representation may for example include a multi-view and depth, multi-layer (multi-plane, multi-spherical), mesh model, and/or point cloud representation. Further, in the described example, the scene data may specifically be video data including a temporal component. Similarly, the scene data may include a suitable three dimensional audio representation, such as for example a multi-channel representation, an audio object based spatial audio representation etc.

The receiver 101 is coupled to a renderer 103 which is arranged to generate an audiovisual signal providing a representation/ view/ audio from a view pose for the scene. In many embodiments, the renderer 103 is arranged to generate an audiovisual signal that comprises both audio and one or more images. In particular, in many XR applications a continuous series of images and audio representing the scenes from the different view images as the user changes pose will be generated.

It will be appreciated that many different techniques, algorithms, and approaches for generating such audio and/or images/video will be known to the skilled person and that any suitable approach of the renderer 103 may be used without detracting from the invention.

From an image perspective, the operation of the renderer 103 will in the following be described with reference to the generation of a single image. However, it will be appreciated that in many embodiments the image may be part of a sequence of images and specifically may be a frame of a video sequence. Indeed, the described approach may be applied to generate a plurality, and often all, frames/ images of an output video sequence.

It will be appreciated that often a stereo video sequence may be generated comprising a video sequence for the right eye and a video sequence for the left eye. Thus, if the images are presented to the user, e.g. via an AR/VR headset, it will appear as if the three dimensional scene is seen from the view pose. In another example, images are presented to the user using a tablet with tilt sensor, and a monoscopic video sequence may be generated. In yet another example, multiple images are weaved or tiled for presentation on an autostereoscopic display.

The renderer 103 may perform a suitable image synthesis/ generation operation for generating view images for the specific representation/ format of the three dimensional image data (or indeed in some embodiments, the three dimensional image data may be converted into a different format from which the view image is generated).

For example, the renderer 103 may for a multi-view+ depth representation typically be arranged to perform view shifting or projection of the received multi-view images based on the depth information. This will typically include techniques such as shifting pixels (changing pixel positions to reflect an appropriate disparity corresponding to parallax changes), de-occlusion (typically based on infilling from other images), combining pixels from different images etc. as will be known to the skilled person.

It will be appreciated that many algorithms and approaches are known for synthesizing images from different three dimensional image data formats and representations and that any suitable approach may be used by the renderer 103.

Examples of appropriate view synthesis algorithms may for example be found in:

"A review on image-based rendering", Yuan HANG, Guo-Ping ANG, Virtual Reality & Intelligent Hardware, Vol 1, Issue 1, February 2019, Pages 39-54, https://doi.org/10.3724/SPJ.2096-5796.2018.0004

"A Review of Image-Based Rendering Techniques", Shum; Kang , Proceedings of SPIE - The International Society for Optical Engineering 4067:2-13, May 2000,DOI: 10.1137/12.386541

or, e.g. in the Wikipedia article on 3D rendering:
https://en.wikipedia.org/wiki/3D_rendering

Similarly, from an audio perspective, many different spatial audio rendering approaches are known including for example surround sound algorithms, room/ Head-Related Transfer Function (HRTF) based algorithms etc. Examples may for example be found in:

"Sound Rendering" by Takala; Tapio; James, Hahn. SIGGRAPH Comput. Graph. Vol. 26. pp. 211-220. doi:10.1145/133994.134063. ISBN 978-0897914796.

"Techniques for Low Cost Spatial Audio by Burgess; David A, Proceedings of the 5th Annual ACM Symposium on User Interface Software and Technology" by . pp. 53-59, doi:10.1145/142621.142628.

"Psychoacoustic Music Sound Field Synthesis" by Ziemer, Tim, Current Research in Systematic Musicology. Vol. 7. Cham: Springer, p. 287. doi:10.1007/978-3-030-23033-3.

In the example of FIG. 1, the rendering apparatus is arranged to dynamically modify and update the view pose for which the renderer 103 renders images and/or sound to reflect user motion/movement. The rendering apparatus is further arranged to provide an audiovisual output signal that is suitable for a user in a vehicle, and which may provide improved user experience and operation for such a scenario. In particular, rather than determining the view pose for which to render the audiovisual signal based on a single pose/ motion, the rendering apparatus is arranged to consider a plurality of motions in determining the view pose for which the audiovisual signal is generated.

The rendering apparatus comprises a first motion source 105 which is arranged to provide a vehicle motion signal that is indicative of a motion of a vehicle. The first vehicle motion signal may provide information on a change of at least one position or orientation component of the vehicle as a function of time.

The first motion source 105 may in some embodiments be coupled to, or comprise, one or more sensors of a vehicle (attached or otherwise ensured to be colocated with the vehicle) from which a motion of the vehicle can be determined. For example, the first motion source 105 may comprise, or be coupled to, a satellite navigation receiver which continuously may provide a position and possibly an orientation of the vehicle. As another example, the first motion source 105 may be located on the vehicle and comprise an inertial guidance system from which a pose can be determined from measured accelerations.

The vehicle motion signal may reflect a pose of the vehicle as a function of time. The vehicle motion signal may indicate a current position and/or orientation of the vehicle and may reflect how these change with time. The vehicle motion signal may be a digital signal comprising a time sampled motion signal where each sample reflects one or more coordinates of a pose (including one or more position coordinates and/or orientation coordinates). For example, in some embodiments, the vehicle motion signal may comprise time samples with each time sample comprising one, more, or all of a front/back, left/right, up/down, pitch, yaw, roll pose value.

In some embodiments, the first motion source 105 may directly receive a vehicle motion signal from an external source (e.g. part of the vehicle) and may provide this signal directly or after suitable processing to the other functions of the rendering apparatus.

The rendering apparatus comprises a second motion source 107 which is arranged to provide a relative user motion signal indicative of a motion of a user relative to the vehicle.

The second motion source 107 may in some embodiments be coupled to, or comprise, one or more sensors detecting the user and deriving an indication of the motion of the user relative to the vehicle. For example, the second motion source 107 may comprise or be coupled to a set of cameras monitoring the inside of a vehicle. The user may be detected in the images and from this information, the position and/or orientation of the user (or e.g. only the head/ face of the user) may be determined. As another example, distance sensors (e.g. based on infrared or ultrasonic signals) may be positioned in the vehicle such that distances from the distance sensors to the user can be determined, and from this the position can be detected. As another example, the user may wear one or more sensors that detect signals from suitable transmitting elements (e.g. ultrasonic transmitters) mounted in the vehicle allowing distances to the radiators to be determined, and from this the pose of the viewer relative to the vehicle can be determined.

The relative user motion signal may reflect a pose of the user relative to the vehicle as a function of time. The relative user motion signal may indicate a current position and/or orientation of the user relative to a pose of the vehicle and may reflect how these changes with time. The relative user motion signal may be a digital signal comprising a time sampled motion signal where each sample reflects one or more coordinates of a pose (including one or more position coordinates and/or orientation coordinates). For example, in some embodiments, the relative user motion signal may comprise time samples with each time sample comprising one, more, or all of a front/back, left/right, up/down, pitch, yaw, roll pose value.

It will be appreciated that similar properties apply (as appropriate) to other pose or motion signals processed by the rendering apparatus, including by those derived from the vehicle motion signal and/or the relative user motion signal.

In some embodiments, the second motion source 107 may directly receive a relative user motion signal from an external source (e.g. part of the vehicle) and may provide this signal, directly or after suitable processing, to the other functions of the rendering apparatus.

Thus, in the approach, the motion signal for which the audiovisual signal is generated is not based on a single pose measurement for the user but rather considers two different motions, namely that of the vehicle and that of the user relative to the vehicle.

The rendering apparatus is further arranged to divide the relative user motion signal into different components which may then be processed differently such that their relative impact on/contribution to the determination of the view pose for the renderer 103 is different.

The first motion source 105 is coupled to a predictor 109 which is arranged to predict a relative user motion signal by applying a prediction model to the vehicle motion signal. A prediction model is applied to the received vehicle motion signal in order to predict/ estimate from this signal what the relative user motion (relative to the vehicle) will be in accordance with the prediction model.

The predictor 109 may thus generate a predicted relative user motion signal that reflects the relative user movement which can be expected to result from the vehicle movement. It may generate a prediction of the relative user movement that reflects the relative user movement caused by the vehicle movement, and specifically it may reflect the relative user movement which is correlated with the vehicle movement. The predicted relative user motion may reflect the involuntary motion of the user that results from the impact of the vehicle motion on the user.

The predictor 109 is further coupled to a residual signal generator 111 which generates a residual user motion signal that reflects at least a component of a difference between the relative user motion signal and the predicted relative user motion signal. The residual signal generator 111 is accordingly also connected to the second motion source 107 from which it receives the relative user motion signal. In many embodiments, the residual user motion signal is simply generated as the relative user motion signal by subtracting the predicted relative user motion signal. For example, a pose component by component subtraction may be performed for each time instant (i.e. for each sample).

Thus, the rendering apparatus is arranged to generate two motion signals, namely a predicted relative user motion signal that may indicate an estimated/ predicted user motion resulting from the vehicle motion and a residual user motion signal that reflects the remaining user motion, i.e. a user motion that may be considered to not directly result from the vehicle motion. The predicted relative user motion signal may be indicative of an expected/ correlated/ involuntary motion of the user whereas the residual user motion signal may be indicative of a non-expected/ uncorrelated/ intentional user motion.

The predictor 109 and the residual signal generator 111 are coupled to a view pose determiner 113 which is arranged to determine one or more view poses. The view pose determiner 113 is coupled to the renderer 103 which is fed the view pose from which it proceeds to generate the audiovisual signal, and specifically it may generate an audiovisual signal comprising a sequence of view images for a varying view pose and/or spatial audio for the scene as perceived by a user at the view pose(s).

The view pose determiner 113 may be arranged to generate a view pose signal by repeatedly generating a view pose and including this in the view pose signal. For example, for each sample/ time instant, a new view pose may be determined and fed to the renderer 103 for generation of a sample (image and/or audio) of the audiovisual signal.

The view pose determiner 113 is arranged to determine the view pose based on the predicted relative user motion signal and the residual user motion signal. The two signals may specifically be combined. However, the dependency of the view pose on the two signals is different. The contribution from the predicted relative user motion signal and the contribution from the residual user motion signal will be different, and often a scaling and/or filtering is different between the two signals.

As a specific example, in many embodiments, the two signals may be filtered and/or scaled before being added together. For example, the predicted relative user motion signal may be filtered to attenuate higher frequencies and may be scaled before being added to the residual user motion signal. Such an approach will result in the view poses closely following the residual user motion signal but only having a reduced contribution of mainly only lower frequencies from the predicted relative user motion signal. As a result, the view poses are determined to predominantly follow user movement that does not directly follow from the vehicle motion, but which is a result of other, and typically intentional, movement (e.g. such as a motion resulting from the user turning the head).

The predicted relative user motion signal may reflect motion that is strictly induced by the vehicle to the user, and which may directly correspond to the vehicle motion. Depending on the prediction model, the predicted relative user motion signal may also include motion that results from involuntary compensation by the user. For example, the user being wiggled up and down because of a bumpy road or pushed sideways when the vehicle takes a sharp turn.

Further, the residual user motion signal may reflect motion resulting from active compensation or even anticipation by the user. For example, it may reflect user motion resulting from user anticipation when approaching a sharp turn or traffic-bump in the road or when approaching a traffic light. As a result, a user will typically tense his muscles. When the anticipation is timed well and accurate enough, the user may fully compensate the motion that would have been introduced by the vehicle. It is noted that when the user is wearing a VR headset, this component is likely to be less dominant, but there may be different triggers, such as a scream, or fellow passenger squeezing your hand. Also, while the user may be surprised by the onset of a car taking a sharp turn in the road, it is natural to compensate and lean opposite to the direction of the force vector introduced by the car. Further, the residual user motion signal may reflect voluntary movement by the user, such as the user turning his head to look around.

In the approach, the motion of the user's head relative to the world-coordinate system may be dissected/ decomposed/ divided into at least two components, namely one that corresponds to predicted relative motion and one reflecting the remaining part of the motion. Subsequently, a separate compensation of these at least two components may be performed to determine a view pose that may then be used, e.g. for generating a 3D virtual audiovisual user representation.

As another example, the predicted relative motion is only compensated if it corresponds with a large motion such as a car making a steep turn. In all other cases the predicted relative motion is not compensated for in the calculation of the user's pose.

As yet another example, the predicted relative motion is compensated depending on what happens in the virtual scene (virtual content).

As yet another example, the separate compensation depends on whether the user is viewing a pure virtual scene or an augmented scene. In the latter case, depending on whether the user looks inside or outside the car, the user will see the overlay graphics content superimposed on the car interior or the road. Each of those ask for a different compensation of the separate terms.

Thus, by considering the specific multiple motion components of the user movement and having different dependencies of the view pose on these components, enhanced effects and a more appropriate and flexible user experience can be achieved.

Different approaches and prediction models may in different embodiments be used by the predictor 109 to determine the predicted relative user motion signal from the vehicle motion signal.

In some embodiments, the prediction model may comprise or include a temporal filtering of the vehicle motion signal. The prediction model may specifically attenuate some frequencies relative to other frequencies

The filtering is a temporal filtering as opposed to a spatial filtering and thus affects a temporal properties/ variations of the vehicle motion signal. In the time domain, the (prediction) filter may be a mathematical operation where future values of a discrete-time signal are estimated as a linear function of previous samples. Indeed, this linear function may represent a filter with certain frequency transfer function where some frequencies are attenuated relative to other frequencies.

For example, typically some very low frequencies of the vehicle motion tend to result in a corresponding user motion. For example, when a car turns or accelerates, the user will typically follow the motion of the car quite closely. If a car drives over a speed bump, it will cause an up-down motion which for lower frequencies will typically be followed by a passenger sitting inside the car. Accordingly, for such low frequency movements, the user motion will tend to follow the vehicle motion and thus the vehicle motion will tend to have a relatively low impact on the relative user motion with respect to the vehicle. However, for higher frequencies, the attenuation of the seat, the human body etc. may result in the vehicle motion not transferring to user motion. As a result, for these higher frequencies, the vehicle motion may directly translate into a relative user motion (e.g. with a sign inversion depending on the coordinate systems applied). In this example, a predictor 109 may accordingly apply a prediction model in the form of a high pass filter. The resulting high pass vehicle motion signal may be used as a predicted relative user motion signal.

As another example, if the vehicle is driving a slow but long bend in the road, the user will experience a constant force on one side of the body. However, the relative user motion will indicate that the user is countering the force and is not moving at all. In this case, no motion compensation is needed.

In some embodiments, the predictor 109 may further be arranged to apply a temporal filtering to the relative user motion signal to generate a filtered relative user motion signal. The prediction of the predicted relative user motion signal may then further be in response to the filtered relative user motion signal.

Thus, in some embodiments, the prediction model may be based on inputs of both the vehicle motion signal and the relative user motion signal, and specifically on filtered versions of themselves.

Specifically, if the vehicle only provides an imprecise pose (position and rotation) measurement, this measurement can be made more precise by observing the relative user motion signal. The latter is typically measured by cameras in a headset and the cameras observe changes with respect to features in the car's interior. By calculating the correlation between prediction made via the relative user motion and the car sensors we can segment out which parts of the relative motion over time are predominantly determined by the car. For those high-correlating segments over time, changes in pose parameters of the car can be made more precise by assuming that the user motion was determined solely by the car (and hence the correlation should have been 1).

In some embodiments, the prediction model may comprise a biomechanical model. The biomechanical model may provide a mechanical model of the human body and may for example be a model showing how motion of a human's torso or seat area results in head movement of the user.

A suitable model may for example be a vertical bar of length between 0.6 - 1.0 m with the mass of a typical human upper body representative of someone sitting in the back seat. Assuming that the vehicle drives along a bend of the road, the bend curvature, car speed and upper body mass will determine the force that will be made on the upper body. Assuming total relaxation of a person's muscles, the person's upper body will tip over until the person notices that he is falling over. At least for the first unexpected part of the bend (the onset) the falling over action will follow a simple model of the bar with length and mass falling over. Once the person feels the action of the bar (typically within a second) the person will try to compensate via muscle action and will try to correct to or maintain an upright sitting position.

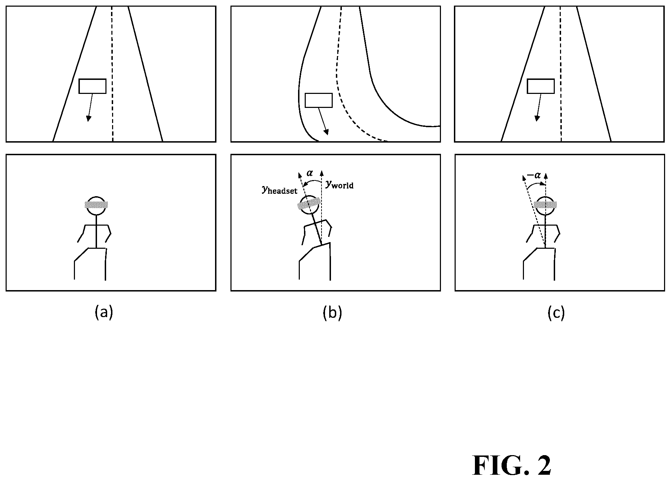

As an example, a biomechanical model may be used to reflect additional motions of the user (and specifically the user's head in many embodiments) that are not directly present in the vehicle motion signal itself but which do result directly and involuntarily from the vehicle movement. For instance, a car that takes a turn in the road may cause a persistent movement of a human head, and hence the headset, but the movement may be one that counters the turning and may thus be different from the vehicle motion signal. For example, a user may tend to turn his head or torso inwards to compensate for the centrifugal force experienced by the user with respect to the vehicle. This may be illustrated by FIG. 2 which shows an example of three different situations during a turn of a vehicle. Initially, the car is travelling straight, and the passenger/user sits up straight (a). Subsequently during the turn itself the passenger/ user is swung to one side by the force of the turning car (b). After the turn has finished the car is again travelling straight and the passenger/user reacts to sit up straight again (c). Such a behavior may be modelled by a biomechanical model.

In some embodiments, the predictor 109 may be arranged to determine the predicted relative user motion signal in dependence on a correlation of the relative user motion signal and the vehicle motion signal. In some embodiments, the prediction model may include a correlation of the relative user motion signal and the vehicle motion signal. The prediction model may be a linear prediction model which performs a correlation between the relative user motion signal and the vehicle motion signal.

In more detail, to generate an experimental prediction model based on correlation, passengers may be instructed to sit in a relaxed way on the back seat of the car with a headset on that blocks all outside auto-visual signals. A car then drives a multitude specific road bends with different speeds and an accelerator mounted in the headset of the passengers may measure the tippling effect as a function of passenger biophysical parameters (total length, upper body length, mass, etc.). After taking sufficient measurements, a linear or non-linear mode may be fitted that can in future be used for real-time prediction.

In some embodiments, the predictor 109 may be arranged to generate the predicted relative user motion signal in dependence on the residual user motion signal.

For example, the prediction model may be a feedback or loop model where one or more parameters can be adapted to reduce a level or amplitude of the residual user motion signal. In some embodiments, the residual user motion signal may be fed back to the predictor 109 which may proceed to modify parameters of the model that generates the predicted relative user motion signal to reduce the amplitude or level of the residual user motion signal. This will typically result in a maximization (or at least increase) in the level of the predicted relative user motion signal. Such a feedback operation may accordingly tend to provide an improved prediction and a more accurate determination of motion that may result directly from the vehicle motion. Thus, effectively, the residual user motion signal may be used as an error signal for adapting the prediction model.

It will be appreciated that different approaches for adapting a prediction based on an error signal are known. For example, the prediction model may consist of a linear predictive filter for which the coefficients are adapted (e.g. without predetermined ranges) based on a least mean square (LMS) based linear adaptive algorithm.

As another example, at regular intervals the prediction is reset based on the error model.

The view pose determiner 113 may in different embodiments be arranged to apply different approaches to determine the view pose(s) and the dependency on the predicted relative user motion and the residual user motion signal may be dependent on the specific preferences and requirements in each individual embodiment.

In many embodiments, the view pose determiner 113 may process the predicted relative user motion signal to generate a first motion component. Similarly, the view pose determiner 113 may process the residual user motion signal to generate a second motion component. The processing of the two motion signals may be different. Each of the motion components may describe a motion and may be represented as absolute poses in the scene coordinate systems, or may possibly be relative poses with respect to e.g. a fixed pose and/or a sequence of poses, such as a predetermined route through the scene. The view pose determiner 113 may then combine the first and second motion components into a view pose signal comprising the view poses for which the rendering is to be performed.

Thus, the view pose determiner 113 may generate a first view pose contribution from the predicted relative user motion signal represented by the first motion component. It may further generate a second view pose contribution from the residual user motion signal represented by the second motion component. It may then proceed to generate the view pose for which rendering is performed as a combination of these separate contributions.

The combination may simply be a summation of the contributions/ components or may more generally in many embodiments be a weighted summation. For example, the relative poses of the first and second components may be added together to form a single view pose offset signal that, e.g., may be added to a fixed pose, and or a varying pose signal (specifically varying as a function of time). In some embodiments, more complex combinations may be performed such as combinations that include introducing a time offset between the signals etc.

The view pose determiner 113 is arranged to apply a different processing to the predicted relative user motion signal and the residual user motion signal when generating the view pose (signal). Thus, the impact on the different types of motion on the resulting view pose can be differentiated and individually adapted to provide desired effects and user experiences, and specifically to compensate for, e.g., involuntary user motion caused by vehicle motion.

In many embodiments, the view pose determiner 113 may be arranged to apply a different weighting to the predicted relative user motion signal than to the relative user motion signal when determining the view pose. The processing (or equivalently the weighting in a combination) of one motion relative to the other may include a different scaling/ gain for the two motions.

For example, in some embodiments, a scaling or gain for the predicted relative user motion signal may be reduced substantially with respect to the scaling or gain for the residual user motion signal. Accordingly, an effect can be provided, where the involuntary movements that result from the vehicle motion signal can be attenuated substantially relative to the voluntary movements of the user. This may, e.g., provide an improved VR experience to a user as the impact of being in a vehicle may be mitigated or reduced.

In some embodiments, the view pose determiner 113 may be arranged to apply a different temporal filtering to the predicted relative user motion signal than to the relative user motion signal. The first and second motion components may for example be generated to have different frequencies attenuated.

In particular, in some embodiments, the view pose determiner 113 may be arranged to extract the first motion component from the predicted relative user motion signal by attenuating temporal frequencies of the predicted relative user motion signal. For example, really low frequencies may be filtered out resulting in motion corresponding to e.g. slow accelerations being reduced or removed. For example, low frequency motion of the vehicle such as long turns (< 0.1 Hz) can be attenuated because the user will not perceive them. Similarly, high frequency motion, such as the shaking of a car (> 10 Hz) may be filtered out entirely because that may feel annoying to the user, and as it will not cause motion induced nausea when this motion is not transferred from the physical world to the virtual one. For medium frequency motion resulting from the vehicle, no filtering may be performed resulting in the motion being presented to the user. Further, no filtering may possibly be applied to the residual user motion signal resulting in the view poses fully following this motion.

As a result, an experience may be provided where the virtual user's view fully follows the voluntary motion of the user but does not follow the slow accelerations or turns of the car or the high frequency shaking. However, the medium frequencies of the vehicle motion signal may still be reflected in the view pose and thus the perceived view of the scene by the user may still include some motion that corresponds to the motion of the car. If this motion is not reflected in the view presented to the user, motion induced illness/ nausea may result (this typiocally arises from conflict between the sensory inputs of different senses, such as the sense of balance and the visual sense).

Such an approach may thus provide a substantially improved user experience.

Of course, in other applications other approaches may be used. For example, some filtering of the mid-frequencies may be applied, e.g. depending on the VR experience being provided (e.g. the story being presented) or how susceptible the user is to nausea in certain frequency bands.

As another example, the VR experience may be designed to incorporate some or all of the slow turns and the filtering coefficients corresponding to slow turns may be filtered or not based on the state of the VR experience.

In some embodiments, the determination of the second motion component may include extracting a part of the motion from the residual user motion signal. For example, some specific motion may be desired to be included in the view pose changes whereas some motion that is not directly predictable from the vehicle motion signal may still not be desirable to have included in the presentation to the user.

In particular, in some embodiments, the view pose determiner 113 may be arranged to detect a user gesture motion component in the residual user motion signal. It may then proceed to extract a first motion component from the residual user motion signal by at least partially removing the user gesture motion component. Specifically, the second motion component may be generated from the residual user motion signal by subtracting the gesture motion component.

The user gesture motion may specifically be a predetermined user motion. For example, the view pose determiner 113 may store parameters for a number of predetermined user motions with each of them being described by a set of parameters that may be variable within ranges. The view pose determiner 113 may then correlate the residual user motion signal with these predetermined user motions while varying the parameters to achieve as close a fit as possible. If the correlation is above a suitable level, the view pose determiner 113 may consider that the residual user motion signal includes the user performing such a predetermined user motion. It may then proceed to subtract this predetermined user motion (for the identified parameters) from the residual user motion signal to generate the second motion component which is then combined with the first motion component.

Thus, in the approach, specific predetermined/ gesture motions of the user may be detected and removed from the user motion that is included in the view pose motion.

In some embodiments, the view pose determiner 113 may be arranged to detect the presence of a predetermined user movement/ user gesture by compensating the residual user motion signal for movement that is considered to result from the vehicle motion signal. For example, the correlation of the predetermined user motion with the residual user motion signal may be preceded by the residual user motion signal being compensated by a motion signal that reflects the impact on the specific user motion of the vehicle motion. For example, the compensation may be based on the predicted relative user motion signal.

As a specific example, the residual user motion is presented to a gesture detector and tracker. If a gesture is detected, then the movement that corresponds to the gesture is tracked. For instance, if the gesture involves the movement of both arms, then the trajectory of the nodes of the arms is estimated by the tracker. This movement is then converted back to a representation that matches with the residual user motion. This signal may thus be the component of the residual user motion that was associated with gestures, and the difference signal (residual of the residual) may be the other component.

In such an example, the second motion component may be the predetermined user motion/ gesture motion. For example, the motion that relates to the movement of the limb that makes the gesture.

Such an approach may be advantageous in many scenarios. For example, hand gestures that the user makes in a car will be influenced by the car movement. For gesture control in the virtual world, these gestures may advantageously be corrected to subtract car induced motion.

In many embodiments, the motions and poses may be multidimensional and include, e.g., three position coordinates and often three orientation coordinates thereby providing a full 6DoF experience. However, in some embodiments, the poses/motions may be represented by fewer dimensions, such as e.g,. only three, or even two, spatial position coordinates.

In scenarios where there may be multiple components, the dependencies of the different pose components may be different when determining the view pose. Thus, the view pose determiner 113 may be arranged to determine the view pose with different dependencies on at least a first pose component and a second pose component. This may in many embodiments be the case for the first and second pose components both being position components or both being orientation components.

For example, the dependencies in the sideways direction for a user may be different from the up/down direction. This may result in the differentiation between predicted and residual user motion being different depending on whether it relates to the user's motion in the up/ down direction in the seat or to sideways motion in the seat. E.g. an up/down motion in a car is typically easier to translate into a virtual scene and passing this component on to the view pose aids realism. Passing sideways motion is more likely to cause nausea and needs to be filtered more.

In some embodiments, the rendering apparatus may further be arranged to receive processing data that is indicative of a processing of the predicted relative user motion signal and/or the residual user motion signal. The processing data may specifically define a dependency between the motion signals and the view pose. The view pose determiner 113 may then adapt its processing to determine the view pose in accordance with processing instructions of the processing data.

The processing data may specifically be provided in messages that may be part of a received audiovisual signal that also includes the audiovisual data for the scene. The data may for example be received in a bitstream from a remote server.

As an example, data may be packed with the audiovisual signal to optimize the experience of a user when in a moving vehicle. Such a processing message may for example for each pose component indicate how it should be filtered. For instance, a processing message may contain:

- Per motion component (e.g., involuntary, voluntary, anticipatory, etc.)

  ○ Optionally per axis
  ○ Optionally per device class

- Only a subset of the components need to be present in the message.
- The filtering value could be an attenuation factor but may also include cut-off frequencies or maybe even FIR or IIR filter coefficients.

For example, a message providing the following processing data indicating an attenuation percentage for different types of pose coordinates and motion components may be provided:

|  | Comp.1 | Comp.2 | Comp.3 | Comp.4 |
|---|---|---|---|---|
| X | 10% | 30% | 50% | 100% |
| Y | 10% | 10% | 80% | 100% |
| Z | 0% | 50% | 60% | 100% |
| Yaw | 50% | 50% | 25% | 100% |
| Pitch | 50% | 100% | 100% | 50% |
| Roll | 50% | 0% | 0% | 0% |

Such messages may also include information on how each scriptable motion event should be translated into a motion in the virtual scene motion response. Only a subset of the motion events has to be present in the message. The response may be a mapping or include a filtering value. The filtering value could be an attenuation factor, as indicated in the table below, but may also include cut-off frequencies or maybe even IIR filter coefficients.

|  | Sit | Look left | Look down |
|---|---|---|---|
| Action 1 |  | 30% | 50% |
| Action 2 |  | 10% |  |
| Action 3 | 100% | 50% | 60% |

In the following, a specific example of an approach that may be used will be described. The description will be considered an example where the rendering is a rendering of a view image from a view pose generated by the view pose determiner 113.

In the example, the view poses used for rendering the audiovisual signal and the (virtual scene objects) are tied to a common world coordinate system. The view pose will in the following specific example be referred to as the virtual camera (the image is generated to reflect the image that would be captured by a virtual camera at the view pose.

Mapping a scene object point to the virtual camera can thus be expressed as a transform to the common world system followed by a transform to the virtual camera:

$$ s \begin{bmatrix} x_c \\ y_c \\ z_c \\ 1 \end{bmatrix} = V T_w M_o \begin{bmatrix} x_o \\ y_o \\ z_o \\ 1 \end{bmatrix} $$

In this equation, $M_o$ is the so-called model matrix that places the virtual scene object in the virtual world coordinate system. This matrix changes when an object moves through virtual space. The matrix $T_w$ transforms a point from the virtual world to the real-world.

Matrix $T_w$ typically results from an initialization step and stays constant during operation. Under user control a calibration, a reset or a setup may be done. For instance, at initialization, $T_w$ can be defined by actively placing visual markers in the scene or by automatically detecting visual features and placing the virtual axis somewhere relative to their position. Cameras, depth sensors and/or other sensors can be used to help in this initial setup.

The view matrix $V$ may capture the positions of the user's eye in real world space and the view matrix $V$ represents the user movement. View matrix $V$ is essentially the pose of the human head or eye. Since a virtual reality headset is typically stereoscopic, we have different view matrices for the left and for the right eye. The view matrices are typically estimated from sensors (cameras, depth sensors, etc.) that are mounted in and on the headset (inside-out tracking).

When a vehicle changes motion, this causes a different torque [m·s] acting on different body parts. Since the human body is flexible, and the distance from the car seat to a human head is large, and a typical human head is heavy, the moment of inertia (angular mass) will also be large. In the absence of early muscle anticipation (based on visual inputs), minor vehicle motions can cause large head motions relative to the vehicle (world). This may be an example of unwanted movements resulting from vehicle motion.

Hence, any vehicle movement that causes a movement difference between the headset and the vehicle, i.e. a relative user motion, will cause changes in $V$ as observed by sensors in the headset. The measured 4x4 view matrix is the user pose and contains the users view of the world scene (rotation and translation) and may be decomposed as:

$$ V \equiv T_{vehicle} V_{intended} $$

where Matrix $V_{intended}$ may reflect the view that the observer desired/intended for the virtual reality content that is being presented. This may be the pose that the user intended to achieve by controlling head pose using neck muscles and other body muscles. However, vehicle motion introduces unintended rotations and translations so the intended pose represented by $V_{intended}$ was never achieved. The united rotations and translations can be represented by another 4x4 transformation matrix $T_{vehicle}$. Note that in case $T_{vehicle} = I$ (the identity matrix) then the vehicle movements/vibrations have no influence on the intended pose.

Thus, in the example, matrix $V$ corresponds to the combination of intended and unintended movements and may be represented a post-multiplication transformation matrix, $T_{vehicle}$ acting on the intended motion $V_{intended}$. The matrices are time varying and in the approach the matrix $T_{vehicle}$ is determined by prediction and corresponds to the predicted relative user motion signal. whereas the intended motion $V_{intended}$ is determined as a remaining signal, i.e. as the relative user motion signal. The system may proceed to determine the view poses to for example compensate for vehicle movements/vibrations. It may specifically be desired to render the virtual world using:

$$s \begin{bmatrix} x'_c \\ y'_c \\ z'_c \\ 1 \end{bmatrix} = V_{\text{compensated}} T_{\text{w}} M_{\text{o}} \begin{bmatrix} x_o \\ y_o \\ z_o \\ 1 \end{bmatrix},$$

where

$$V_{\text{compensated}} = T_{\text{vehicle}}^{-1} V.$$

In the approach, the predictor 109 may specifically seek to estimate the vehicle transformation matrix $T_{\text{vehicle}}$ such that its affine inverse $T_{\text{vehicle}}^{-1}$ can be calculated and used by the view pose determiner 113 to determine the view pose as represented by the compensated view matrix $V_{\text{compensated}}$.

As a specific example, the matrix $T_{\text{vehicle}}$ corresponding to the predicted relative user motion signal may be determined by filtering of the view matrix $V$ where $V$ is the view matrix that may correspond to the vehicle motion signal combined with the relative user motion signal.

Although vehicle suspension systems are quite effective, a high temporal frequency of vehicle movement can still occur. We can hence extract $T_{\text{vehicle}}$ to be the high-pass component of $V$ as measured with the inside out tracking sensors inside the headset. Thus, the predicted relative user motion signal represented by $T_{\text{vehicle}}$ may be predicted as the high-pass component of $V$ representing vehicle motion signal. In this case, the vehicle induced high frequency component of the pose as measured from the headset cameras relative to the car's interior are directly used to estimate the car motion induced component.

For completeness we specify how 4x4 homogeneous transformation matrices that contain a 3x3 rotation matrix and a 3x1 translation vector can be processed. As a specific example of determining $T_{\text{vehicle}}$ the 4x4 view matrix may first be split into an orientation quaternion and translation vector:

$$\mathbf{q} = \text{quat}(V)$$

$$\mathbf{t} = (V_{14}, V_{24}, V_{34})^t$$

Note that alternative representations for rotation exist and may be preferred in some cases. To measure temporal rotation and translation change the differential rotation and differential translation may be calculated as

$$\mathbf{q}_\Delta = \mathbf{q}_k \cdot \mathbf{q}_{k-1}^{-1}$$

$$\mathbf{t}_\Delta = \mathbf{t}_k - \mathbf{t}_{k-1}$$

where $k$ and $k - 1$ correspond to two discrete time steps e.g., 1/30 second apart. We then use a recursive filter to output filtered rotations that ignore instant large rotations that are assumed to be introduced by vehicle motion:

$$\tilde{\mathbf{q}}_k = \begin{cases} \mathbf{q}_k & \text{if} \quad \left| 2\cos^{-1}(\mathbf{q}_{\Delta,w}) \right| < \Delta_{\text{rotation}} \\ \mathbf{q}_{k-1} & \text{otherwise} \end{cases}$$

where $\tilde{\mathbf{q}}_k$ is the filtered rotation, $|2\cos^{-1}(\mathbf{q}_{\Delta,w})|$ is the magnitude of the instant rotation change angle [radian] and rotation is a threshold above which we do not want to apply the instant rotation to the headset view matrix.

Similarly, the translation vector is filtered as:

$$\tilde{\mathbf{t}}_k = \begin{cases} \mathbf{t}_k & \text{if} & |\mathbf{t}_\Delta| < \Delta_{\text{translation}} \\ \mathbf{t}_{k-1} & \text{otherwise} \end{cases}.$$

where $\tilde{\mathbf{t}}_k$ is the filtered translation and $\Delta_{\text{translation}}$ is a threshold above which we do not apply the instant translation to the headset view matrix.

We now calculate the $T_{\text{vehicle}}$ as

$$T_{\text{translation}} = \begin{bmatrix} 1 & 0 & 0 & \tilde{\mathbf{t}}_x \\ 0 & 1 & 0 & \tilde{\mathbf{t}}_y \\ 0 & 0 & 1 & \tilde{\mathbf{t}}_z \\ 0 & 0 & 0 & 1 \end{bmatrix}$$

$$T_{\text{rotation}} = \mathbf{Mat4}(\tilde{\mathbf{q}})$$

$$T_{\text{vehicle}} = T_{\text{translation}} T_{\text{rotation}}.$$

The above processing hence assumes that we can derive the effects of vehicle motion on headset motion from the high-frequency motion components measured by sensors in the headset relative to the interior (visual) features of the car.

In the following we undo this vehicle induced high-frequency effect. The residual user motion signal represented by $V_{\text{compensated}} = T_{\text{vehicle}}^{-1} V$ may hence be determined. Finally, the rendering mapping may then be performed according to the following (where $V_{\text{compensated}}$ reflects the view pose determined by the view pose determiner 113):

$$s \begin{bmatrix} x_c' \\ y_c' \\ z_c' \\ 1 \end{bmatrix} = V_{\text{compensated}} T_w M_o \begin{bmatrix} x_o \\ y_o \\ z_o \\ 1 \end{bmatrix}.$$

The data signal generating apparatus and the rendering apparatus may specifically be implemented in one or more suitably programmed processors. An example of a suitable processor is provided in the following.

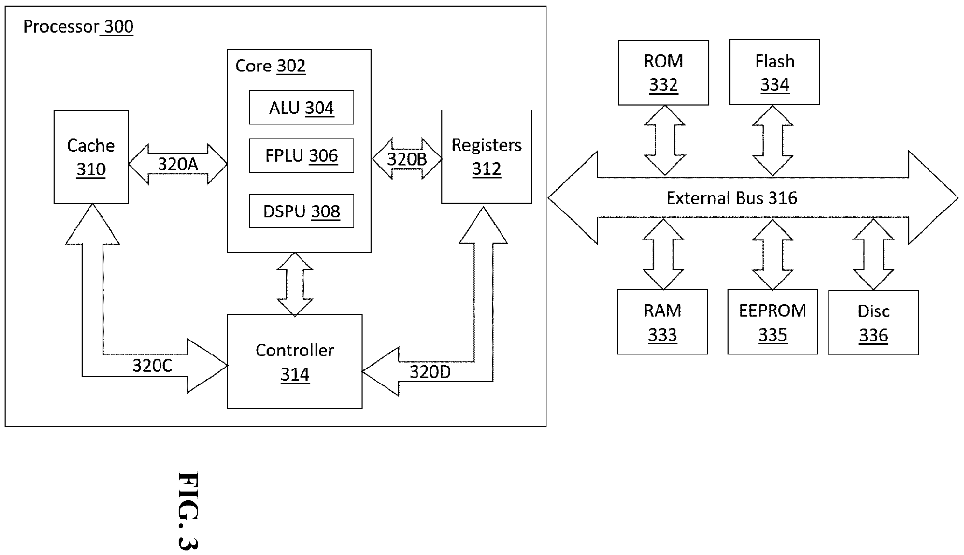

FIG. 3 is a block diagram illustrating an example processor 300 according to embodiments of the disclosure. Processor 300 may be used to implement one or more processors implementing the rendering apparatus of FIG. 1. Processor 300 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 300 may include one or more cores 302. The core 302 may include one or more Arithmetic Logic Units (ALU) 304. In some embodiments, the core 302 may include a Floating Point Logic Unit (FPLU) 306 and/or a Digital Signal Processing Unit (DSPU) 308 in addition to or instead of the ALU 304.

The processor 300 may include one or more registers 312 communicatively coupled to the core 302. The registers 312 may be implemented using dedicated logic gate circuits (e.g., flip-flops) and/or any memory technology. In some embodiments the registers 312 may be implemented using static memory. The register may provide data, instructions and addresses to the core 302.

In some embodiments, processor 300 may include one or more levels of cache memory 310 communicatively coupled to the core 302. The cache memory 310 may provide computer-readable instructions to the core 302 for execution. The cache memory 310 may provide data for processing by the core 302. In some embodiments, the computer-readable instructions may have been provided to the cache memory 310 by a local memory, for example, local memory attached to the external bus 316. The cache memory 310 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 300 may include a controller 314, which may control input to the processor 300 from other processors and/or components included in a system and/or outputs from the processor 300 to other processors and/or components included in the system. Controller 314 may control the data paths in the ALU 304, FPLU 306 and/or DSPU 308. Controller 314 may be implemented as one or more state machines, data paths and/or dedicated control logic. The gates of controller 314 may be implemented as standalone gates, FPGA, ASIC or any other suitable technology.

The registers 312 and the cache 310 may communicate with controller 314 and core 302 via internal connections 320A, 320B, 320C and 320D. Internal connections may be implemented as a bus, multiplexer, crossbar switch, and/or any other suitable connection technology.

Inputs and outputs for the processor 300 may be provided via a bus 316, which may include one or more conductive lines. The bus 316 may be communicatively coupled to one or more components of processor 300, for example the controller 314, cache 310, and/or register 312. The bus 316 may be coupled to one or more components of the system.

The bus 316 may be coupled to one or more external memories. The external memories may include Read Only Memory (ROM) 332. ROM 332 may be a masked ROM, Electronically Programmable Read Only Memory (EPROM) or any other suitable technology. The external memory may include Random Access Memory (RAM) 333. RAM 333 may be a static RAM, battery backed up static RAM, Dynamic RAM (DRAM) or any other suitable technology. The external memory may include Electrically Erasable Programmable Read Only Memory (EEPROM) 335. The external memory may include Flash memory 334. The External memory may include a magnetic storage device such as disc 336. In some embodiments, the external memories may be included in a system.

The invention can be implemented in any suitable form including hardware, software, firmware, or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

The term "in dependence on" or dependent on may, e.g. be substituted by the terms "in response to" or "as a function of' or "based on".

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by, e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. An apparatus for audiovisual rendering, the apparatus comprising:

    a receiver (101) arranged to receive audiovisual data representing a scene;
    a first source (105) providing a vehicle motion signal indicative of a motion of a vehicle;
    a second source (107) providing a relative user motion signal indicative of a motion of a user relative to the vehicle;
    a predictor (109) arranged to generate a predicted relative user motion signal by applying a prediction model to the vehicle motion signal;
    a residual signal generator (111) arranged to generate a residual user motion signal indicative of at least a component of a difference between the relative user motion signal and the predicted relative user motion signal;
    a view pose determiner (113) arranged to determine a view pose in dependence on the residual user motion signal and the predicted relative user motion signal, a dependency of the view pose on the residual user motion signal being different than a dependency of the view pose on the predicted relative user motion signal; and a renderer (103) arranged to render an audiovisual signal for the view pose from the audiovisual data.

2. The apparatus of claim 1 wherein the prediction model comprises a temporal filtering of the vehicle motion signal.

3. The apparatus of claim 2 wherein the predictor (109) is arranged to apply a temporal filtering to the relative user motion signal to generate a filtered relative user motion signal, and to predict the predicted relative user motion signal in dependence on the filtered relative user motion signal.

4. The apparatus of any previous claim wherein the prediction model comprises a biomechanical model.

5. The apparatus of any of the previous claims wherein the view pose determiner (113) is arranged to apply a different weighting to the predicted relative user motion signal than to the residual user motion signal.

6. The apparatus of any of the previous claims wherein the view pose determiner (113) is arranged to apply a different temporal filtering to the predicted relative user motion signal than to the residual user motion signal.

7. The apparatus of any previous claim wherein the view pose determiner (113) is arranged to determine a first view pose contribution from the predicted relative user motion signal and a second view pose contribution from the residual user motion signal, and to generate the view pose by combining the first view pose contribution and the second view pose contribution.

8. The apparatus of any previous claim wherein the view pose determiner (113) is arranged to extract a first motion component from the predicted relative user motion signal by attenuating temporal frequencies, and to determine the view pose to include a contribution from the first motion component.

9. The apparatus of any previous claim wherein the view pose determiner (113) is arranged to detect a user gesture motion component in the residual user motion signal and to extract a first motion component from the residual user motion signal in dependence on the user gesture motion component, and to determine the view pose to include a contribution from the user gesture motion component.

10. The apparatus of any previous claim wherein the predictor (109) is arranged to determine the predicted relative user motion signal in response to a correlation of the relative user motion signal and the vehicle motion signal.

11. The apparatus of any previous claim wherein at least one of the predicted relative user motion signal and the residual user motion signal is indictive of a plurality of pose components, and the view pose determiner is arranged to determine the view pose with different dependencies on at least a first pose component and a second pose component of the plurality of pose components.

12. The apparatus of any previous claim wherein the receiver (101) is arranged to receive processing data indicative of a processing of at least one of the predicted relative user motion signal and the residual user motion signal; and the view pose determiner (113) is arranged to determine the view pose in accordance with processing instructions of the processing data.

13. The apparatus of any previous claim wherein the predictor (109) is arranged to generate the predicted relative user motion signal in dependence on the residual user motion signal.

14. A method of audiovisual rendering, the method comprising:

receiving audiovisual data representing a scene;
providing a vehicle motion signal indicative of a motion of a vehicle;
providing a relative user motion signal indicative of a motion of a user relative to the vehicle;
generating a predicted relative user motion signal by applying a prediction model to the vehicle motion signal;
generating a residual user motion signal indicative of at least a component of a difference between the relative user motion signal and the predicted relative user motion signal;
determining a view pose in dependence on the residual user motion signal and the predicted relative user motion signal, a dependency of the view pose on the residual user motion signal being different than a dependency of the view pose on the predicted relative user motion signal; and

rendering an audiovisual signal for the view pose from the audiovisual data.

15. A computer program product comprising computer program code means adapted to perform all the steps of claims 14 when said program is run on a computer.

**FIG. 1**

(a)                              (b)                              (c)

**FIG. 2**

**FIG. 3**

Europäisches
Patentamt

European
Patent Office

Office européen
des brevets

# EUROPEAN SEARCH REPORT

Application Number

EP 22 18 7777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/180647 A1 (ANTHONY SAMUEL ENGLISH [US]) 11 June 2020 (2020-06-11) * paragraphs [0018], [0019], [0037], [0056]; figures 2, 6 * ----- | 1-15 | INV. B60K37/06 B60W50/00 |
| A | US 9 396 588 B1 (LI ADAM [US]) 19 July 2016 (2016-07-19) * abstract * ----- | 1-15 | |

TECHNICAL FIELDS
SEARCHED      (IPC)

B60K
B60W

The present search report has been drawn up for all claims

| Place of search | Date of completion of the search | Examiner |
|---|---|---|
| Munich | 25 January 2023 | Brachmann, Patrick |

EPO FORM 1503 03.82 (P04C01)

## ANNEX TO THE EUROPEAN SEARCH REPORT
## ON EUROPEAN PATENT APPLICATION NO.

EP 22 18 7777

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2023

| Patent document cited in search report | | Publication date | Patent family member(s) | | Publication date |
|---|---|---|---|---|---|
| US 2020180647 | A1 | 11-06-2020 | US 2020180647 | A1 | 11-06-2020 |
| | | | US 2020247432 | A1 | 06-08-2020 |
| US 9396588 | B1 | 19-07-2016 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUAN HANG ; GUO-PING ANG.** A review on image-based rendering. *Virtual Reality & Intelligent Hardware,* February 2019, vol. 1 (1), 39-54, https://doi.org/10.3724/SPJ.2096-5796.2018.0004
- **SHUM; KANG.** A Review of Image-Based Rendering Techniques. *Proceedings of SPIE - The International Society for Optical Engineering,* May 2000, vol. 4067, 2-13
- **TAKALA; TAPIO ; AMES, HAHN.** Sound Rendering. *SIGGRAPH Comput. Graph.,* vol. 26, ISBN ISBN 978-0897914796, 211-220
- **BURGESS ; DAVID A.** Techniques for Low Cost Spatial Audio. *Proceedings of the 5th Annual ACM Symposium on User Interface Software and Technology,* 53-59
- Psychoacoustic Music Sound Field Synthesis. **ZIEMER, TIM.** Current Research in Systematic Musicology. Springer, vol. 7, 287